# EUROPEAN PATENT APPLICATION

(11) **EP 3 364 182 A1**
(43) Date of publication of application: **22.08.2018**
(21) Application number: 18156879.1
(22) Date of filing: 15.02.2018
(51) Int. Cl.: G01N 27/30, G01N 27/403, G01N 21/67, G01N 21/69

(54) **ELECTROLYSIS DEVICE**

(30) Priority: 16.02.2017 JP 2017026679
(71) Applicant: ARKRAY, Inc., Minami-ku Kyoto-shi, Kyoto 601-8045 (JP)
(72) Inventor: KASAI, Tokuo, Kyoto-shi, Kyoto 602-0008 (JP)
(74) Representative: Dehns

(57) **Abstract**

An electrolysis device (1) including a cell (10) that contains a solution (60) and a pair of electrodes installed in the cell (10). One electrode of the pair of electrodes is a carbon electrode (30), and a liquid-contacting portion (31) of the carbon electrode (30) that makes contact with the solution (60) in the cell (10) is configured by only a flat face or a three-dimensional curved face. Electrolysis device (1) can further comprise a containment space (12) for colllecting any broken fragments from the carbon electrode (30) and light receiver (4) capable of receiving a luminescence of the detection substance with a light-transmissive portion (11) integrated in the cell (10).

## Description

### BACKGROUND

### Technical Field

The present invention relates to an electrolysis device including a carbon electrode.

### Related Art

A material for electrodes used in electrolysis varies depending on the object of an electrolysis reaction. For example, to detect a metal ion present in a solution, it is important to select a material for electrodes that is compatible with the type of metal ion, and that is a material resistant to degradation of the electrode from repeated electrolysis reactions.

Carbon electrodes are often used as anodes or as cathodes in electrochemistry. Carbon, which is a material for carbon electrodes, is manufactured by consolidating particles of carbon, is brittle compared to metal electrodes, and bonding between the particles is liable to break under electrical forces or under physical forces such as contact. Namely, carbon electrodes have lower resistance to degradation than do metal electrodes.

Note that in a plasma spectrometry analysis instrument being developed by the applicants (JP 2016-130734 A), as a result of investigating detection sensitivity with respect to heavy metals (Pb or Hg) for detection, a carbon electrode is employed for one of the electrodes.

JP 2006-284240 A describes preventing degradation of glassy carbon due to heating at high temperature by making the surface roughness of the glassy carbon 10 µm or less.

### SUMMARY

An exemplary embodiment of the present disclosure relates to using the shape of a carbon electrode to raise resistance to degradation and, as far as possible, to prevent particles from breaking off.

An electrolysis device according to the present disclosure includes a cell containing a solution and a pair of electrodes installed in the cell. One electrode of the pair of electrodes is a carbon electrode. A liquid-contacting portion of the carbon electrode that makes contact with the solution in the cell is configured by only a flat face or a three-dimensional curved face. The flat face or three-dimensional curved face is a face having no vertices, side-edges, or rims. A three-dimensional curved face is a face which is curved, in three-dimensional space. The three-dimensional curved face may be curved in one or both of its two dimensions.

In the electrolysis device according to the present disclosure, the liquid-contacting portion of the carbon electrode that makes contact with the solution in the cell is configured by only a flat face or a three-dimensional curved face. Thus, the liquid-contacting portion does not include a shape such as a side-edge or vertex where high current density is liable to occur when a voltage is applied. This prevents particles of carbon breaking off from such side-edges or vertices as temperature rises, vibrations increase, or the like as a result of high energy load from increased current density.

### BRIEF DESCRIPTION OF THE DRAWINGS

Certain preferred embodiments of the present invention will now be described by way of example only and with reference to the accompanying drawings in which:
Fig. 1A is a schematic perspective view of an example of a preferable shape of a liquid-contacting portion of a carbon electrode in a cell, Fig. 1B is a plan view of the same, and Fig. 1C is a cross-section of Fig. 1B taken along line I-I;
Fig. 2A is a schematic perspective view of an example of a preferable shape of a liquid-contacting portion of a carbon electrode in a cell, Fig. 2B is a plan view of the same, and Fig. 2C is a cross-section of Fig. 2B taken along line II-II;
Fig. 3A is a schematic perspective view of a preferable example of a shape of a liquid-contacting portion of a carbon electrode in a cell, Fig. 3B is a plan view of the same, and Fig. 3C is a side cross-section of the same;
Fig. 4 is a schematic side cross-section of an example of a preferable shape of a liquid-contacting portion of a carbon electrode in a cell;
Fig. 5A is a schematic see-through perspective view of an example of a containment space provided to a cell, and Fig. 5B is schematic cross-section of Fig. 5A, as viewed along a V-V direction;
Fig. 6A is a schematic cross-section illustrating relevant elements in a concentration process in plasma spectroscopy analysis using the electrolysis device of Fig. 1A, and Fig. 6B is a schematic cross-section illustrating relevant elements in a detection process of the same;
Fig. 7A is a schematic perspective view of an example of an unsuitable shape of a liquid-contacting portion of a carbon electrode in a cell, Fig. 7B is a plan view of the same, and Fig. 7C is a cross-section of Fig. 7B taken along line VII-VII; and
Fig. 8A is a schematic perspective view of an example of an unsuitable shape of a liquid-contacting portion of a carbon electrode in a cell, Fig. 8B is a plan view of the same, and Fig. 8C is a cross-section of Fig. 8B taken along line VIII-VIII.

### DETAILED DESCRIPTION

As described above, in a first aspect of an electrolysis device of the present disclosure, the electrolysis device comprises a cell for containing a solution, and a pair of electrodes installed in the cell. One of the pair of electrodes is a carbon electrode. A liquid-contacting portion of the carbon electrode for making contact with the solution in the cell is configured by only a flat face or a three-dimensional curved face.

The pair of electrodes are solid electrodes, and a specific example thereof is rod electrodes or the like. As the material of the electrodes, so long as one electrode is carbon, the material of the other is not particularly limited, so long as the material is a solid, conductive material, and the material thereof may be appropriately determined according to the type of detection substance, for example. The material of the other electrode may, for example, be a non-metal, may be a metal, or may be a mixture thereof. When the material of the other electrode is a non-metal, then the material of the other electrode may, for example, include one type of non-metal, or may include two or more types of non-metal. Examples of the non-metal include carbon. When the material of the other electrode is a metal, the material of the other electrode may, for example, include one type of metal, or may include two or more types of metal. Examples of the metal include gold, platinum, copper, zinc, tin, nickel, palladium, titanium, molybdenum, chromium, and iron. When the material of the other electrode includes two or more types of metal, the material of the electrode may be an alloy. Examples of the alloy include brass, steel, INCONEL (registered trademark), Nichrome, and stainless steel. The pair of electrodes may, for example, be the same material or different materials. The size of the electrodes is not particularly limited, as long as it is a size such that at least a portion of the electrode can be placed in the cell.

The liquid-contacting portion of the carbon electrode is configured by only the flat face or the three-dimensional curved face, as described above. The flat face or three-dimensional curved face is a face that does not include any vertices, side-edges, or rims. For example, the flat face or three-dimensional curved face may be defined as a continuous face that is a face such that when any given cross-section is taken of the liquid-contacting portion and an outline on the solution side of the liquid-contacting portion is written as a function, the outline is differentiable at all of the points thereon. Being differentiable at any given point on the function means that a tangent using a left limit and a tangent using a right limit at the given point match each other (namely, the slopes of the tangents are the same). Specifically, there are no "side-edges", "vertices", or "rims" at all present on the liquid-contacting portion of the carbon electrode.

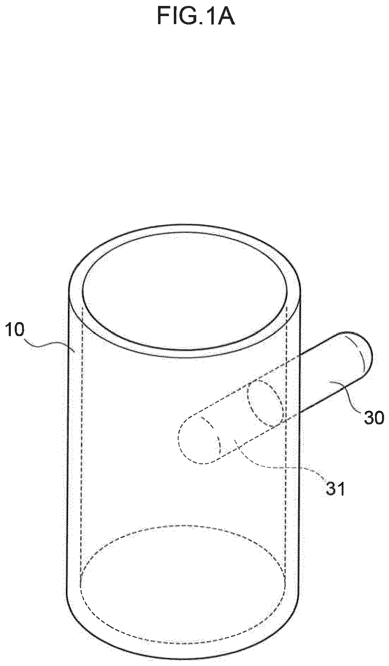

Explanation follows regarding examples of shapes of a carbon electrode 30, with reference to the schematic diagrams of Figs. 1A to 1C, Figs. 2A to 2C, Figs. 3A to 3C, Fig. 4, Figs. 7A to 7C, and Figs. 8A to 8C. Note that structures, other than the carbon electrode 30, provided inside or outside a cell 10 are omitted from illustration in these figures.

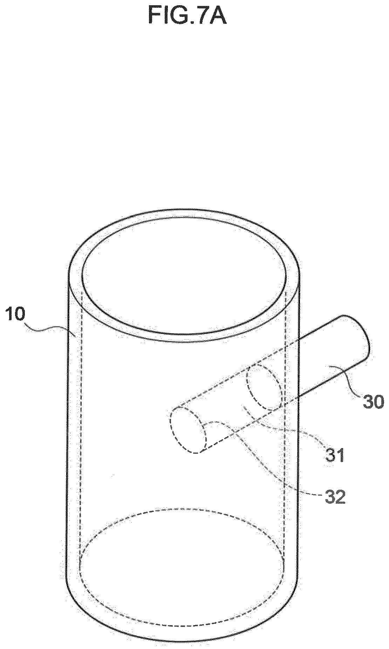

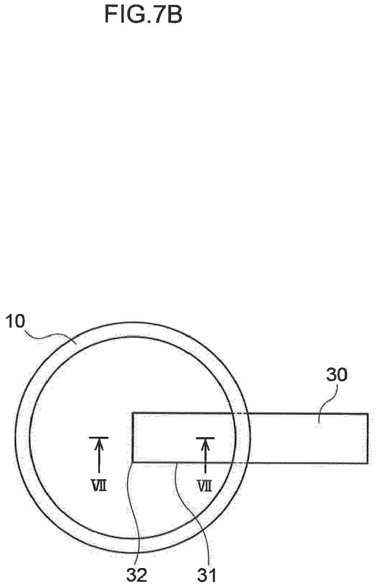

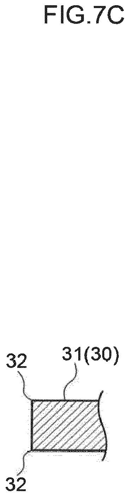

In the example schematically illustrated in Fig. 7A and Fig. 7B, one base face side of the cylindrical-shaped carbon electrode 30 is installed so as to stick out toward the interior of the cell 10 from a side face of the cell 10. Then, a peripheral rim of the base face becomes a side-edge 32. A portion of the carbon electrode 30 that is positioned in the cell 10 (a liquid-contacting portion 31) then exhibits a rectangular cross-section as, for example, illustrated in Fig. 7C. The outline of the cross-section includes right angled vertices due to the side-edge 32, and thus the liquid-contacting portion 31 of the carbon electrode 30 is not configured with what is referred to in the present invention as only a "flat face" or "three-dimensional curved face". Note that the outline of the cross-section is non-differentiable at the vertex. Due to adopting such a shape, the current density at the side-edge 32 portion tends to be high when a voltage is applied, resulting in particles of carbon being liable to break off during an electrolysis reaction. Such a carbon electrode 30 is not preferable for the electrolysis device of the present aspect.

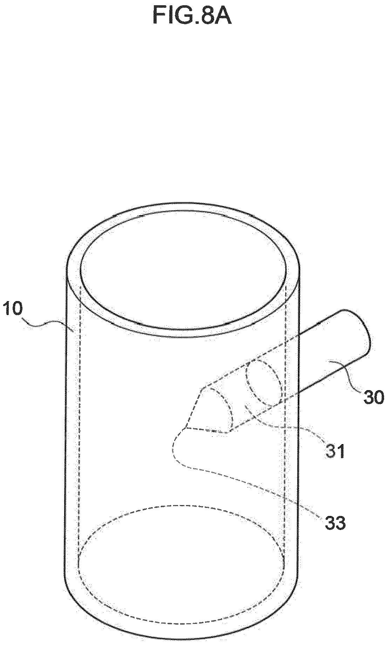

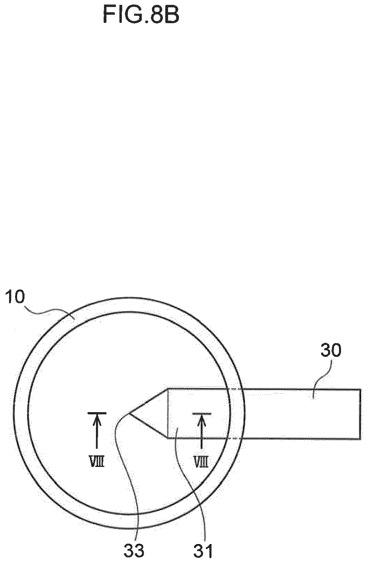

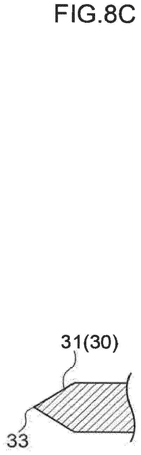

Moreover, in the example schematically illustrated in Fig. 8A and Fig. 8B, a tip end at one end of a cylindrical-shaped carbon electrode 30 is tapered into a conical shape. The tip end is installed so as to stick out toward the interior of the cell 10 from the side face of the cell 10. Then, the tip end is a vertex 33. The portion of the carbon electrode 30 that is positioned in the cell 10 then exhibits an arrowhead shape in cross-section through the tip end, as illustrated in Fig. 8C. The outline of the cross-section includes an angular vertex formed due to the vertex 33, and thus a liquid-contacting portion 31 of the carbon electrode 30 is not configured with what is referred to in the present invention as only a "flat face" or a"three-dimensional curved face". Note that the outline of the cross-section is non-differentiable at the vertex. Due to adopting such a shape, the current density at a portion at the vertex 33 tends to be high when a voltage is applied, and particles of carbon are liable to break off during an electrolysis reaction. Such a carbon electrode 30 is also not preferable for the electrolysis device of the present configuration.

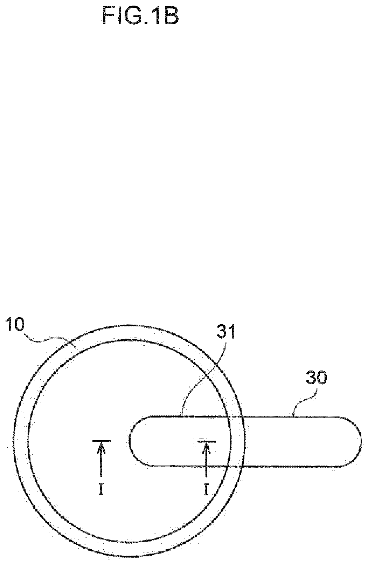

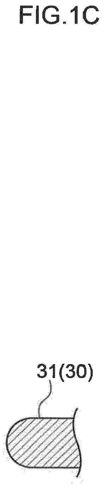

On the other hand, in the example schematically illustrated in Fig. 1A and Fig. 1B, one end of the cylindrical-shaped carbon electrode 30 has a hemispherical shape, and the carbon electrode 30 is installed such that the hemispherical shaped portion sticks out toward the interior of the cell 10 from the side face of the cell 10. In this case, the portion of the carbon electrode 30 that is positioned in the cell 10 exhibits a cross-section having an outline profile that, for example as illustrated in Fig. 1C, includes parallel straight lines that then curve into respective circular arcs meeting at the tip end. The outline of the cross-section section does not include any side-edges, vertices, or rims, and thus the liquid-contacting portion 31 of the carbon electrode 30 is configured by what is referred to in the present invention as only a "three-dimensional curved face". Note that the outline of the cross-section is differentiable at every point. Due to adopting such a shape, there are no portions where the current density tends to be extremely high when a voltage is applied, and particles of carbon become less liable to break off during an electrolysis reaction.

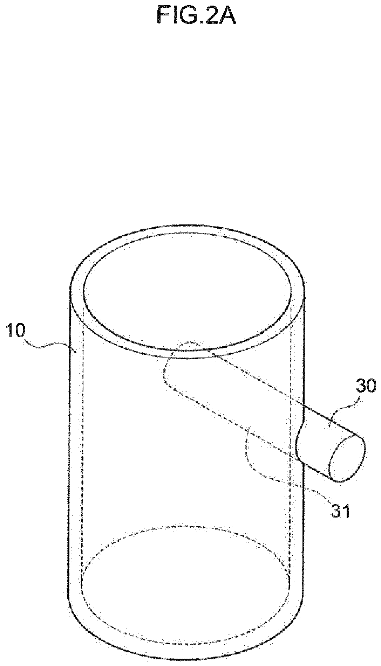

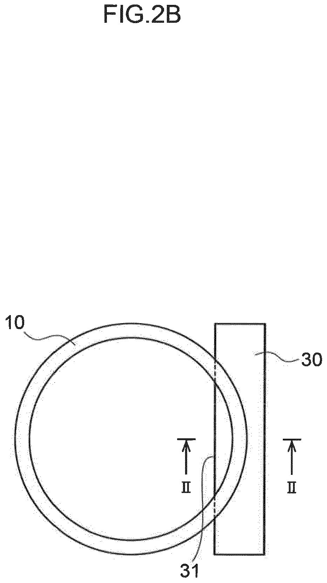

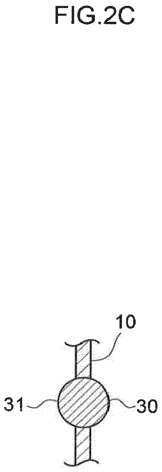

In the example schematically illustrated in Fig. 2A and Fig. 2B, a cylindrical-shaped carbon electrode 30 is installed in a state in which its length direction is orthogonal to the length direction of the cell 10, and in a state in which a portion of a side face of the carbon electrode 30 is exposed to the inside of the cell 10. Then, the portion of the carbon electrode 30 that is positioned in the cell 10 exhibits a cross-section which is circular arc shaped, for example as illustrated in Fig. 2C. The outline of the cross-section includes no side-edges, points, or rims, and thus the liquid-contacting portion 31 of the carbon electrode 30 is configured with what is referred to in the present invention as only a "three-dimensional curved face". Note that the outline of the cross-section is differentiable at every point. Due to adopting such a shape, there are no portions where the current density tends to be high when a voltage is applied, and particles of carbon become less liable to break off during an electrolysis reaction.

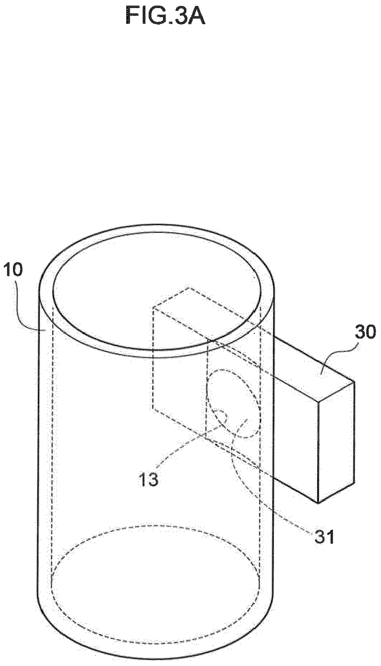

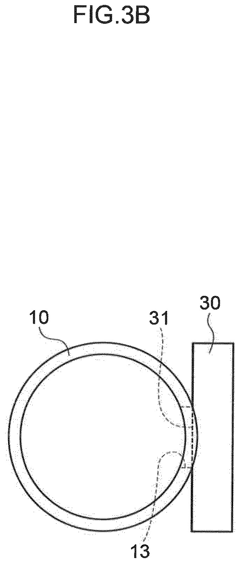

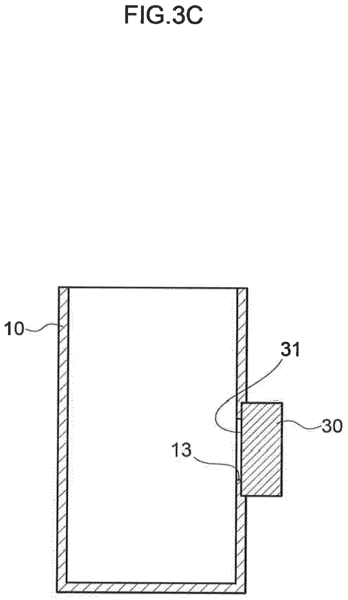

Moreover, in the example schematically illustrated in Fig. 3A to Fig. 3C, a through hole 13 is provided penetrating through a side face of a cylindrical-shaped cell 10 at a portion where the thickness has been cut away. In addition a flat plate-shaped carbon electrode 30 is installed so as to block off the through hole 13 from the outside. In this example, a flat face portion of the carbon electrode 30 facing the penetrating hole 13 is a liquid-contacting portion 31. Thus, the outline of a cross-section of the liquid-contacting portion 31 exhibits a straight line shape, and therefore includes no side-edges, points, or rims. Thus, the liquid-contacting portion 31 of the carbon electrode 30 is configured with what is referred to in the present invention as only a "flat face". Note that the outline of the cross-section is differentiable at every point. Due to adopting such a shape, there are no portions where the current density tends to be extremely high when a voltage is applied, and particles of carbon are not liable to break off during an electrolysis reaction.

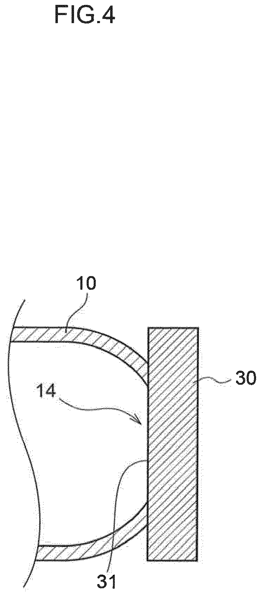

Note that as illustrated in Fig. 4, in cases in which a portion of the side face cross-section profile of a cell 10 is an arc shaped portion, an opening 14 may be provided with a shape as if part of the arc shaped portion has been cut away, and a flat plate-shaped carbon electrode 30 installed so as to block off the opening 14 from the outside. In this example, the flat face portion of the carbon electrode 30 facing the opening 14 is a liquid-contacting portion 31. Thus, the outline of the cross-section of the liquid-contacting portion 31 exhibits a straight line shape, and therefore has no side-edges, points, or rims. Thus, the liquid-contacting portion 31 of the carbon electrode 30 is configured with what is referred to in the present invention as only a "flat face". Note that the outline of the cross-section is differentiable at every point. Due to adopting such a shape, there are no portions where the current density tends to be extremely high when a voltage is applied, and particles of carbon are not liable to break off during an electrolysis reaction.

The solution is a liquid in which a material to be analyzed (detection substance) by an electrolysis reaction is dissolved, suspended, or dispersed. The liquid may, for example, be a liquid specimen, or may be a diluent of a solid specimen that has been, for example, suspended, dispersed, or dissolved in a medium. A neat solution of the specimen may, for example, be employed as it is as the liquid specimen, or the neat solution may be employed with a medium, for example, by suspending, dispersing, or dissolving the neat solution in the medium. So long as the medium is able to suspend, disperse, or dissolve the specimen, there are no particular limitations thereto, and examples of the medium include water and buffers. Examples of the specimen include specimens (samples) taken from biological bodies, environmental specimens (samples), metals, chemical substances, pharmaceutical products, and so on. There are no particular limitations to specimens taken from biological bodies, and examples thereof include urine, blood, hair, saliva, sweat, nails, and the like. The blood specimen may, for example, be erythrocytes, whole blood, serum, blood plasma, or the like. Examples of the biological body include a human, a non-human animal, a plant, or the like. The non-human animal may, for example, be a mammal other than a human, a reptile, an amphibian, a fish, an insect, or the like. The environmental specimen is not particularly limited, and examples thereof include food, water, soil, the atmosphere, an air sample, or the like. Examples of the food include fresh foods, and processed foods. Examples of the water include drinking water, underground water, river water, sea water, household effluent, and the like.

There are no particular limitations to the detection substance so long as the detection substance has electric charge, and examples of the detection substance include metals, chemical substances, and the like. The metal is not particularly limited, and examples of the metal include aluminum (Al), antimony (Sb), arsenic (As), barium (Ba), beryllium (Be), bismuth (Bi), cadmium (Cd), caesium (Cs), gadolinium (Gd), lead (Pb), mercury (Hg), nickel (Ni), palladium (Pd), platinum (Pt), tellurium (Te), thallium (Tl), thorium (Th), tin (Sn), tungsten (W), and uranium (U). Examples of the chemical substance include reagents, agricultural chemicals, and cosmetics. There may, for example, be a single type or two or more types of the detection substance.

In cases in which the detection substance is a metal, the liquid may, for example, include a reagent for separating the metal in the specimen. Examples of the reagent include chelating agents, masking agents, and the like. Examples of the chelating agent include dithizone, tiopronin, meso-2,3-dimercaptosuccinic acid (DMSA), sodium 2,3-dimercapto-1-propane sulfonate (DMPS), ethylenediaminetetraacetic acid (EDTA), nitrilotriacetic acid (NTA), ethylenediamine-N,N'-disuccinic acid (EDDS), and alpha lipoic acid. "Masking" in an analysis method mentioned herein deactivating the reactivity of SH groups, and may, for example, be performed by chemically modifying SH groups. Examples of the masking agent include maleimide, N-methylmaleimide, N-ethylmaleimide, N-phenylmaleimide, maleimidopropionic acid, iodoacetamide, and iodoacetic acid.

The liquid may, for example, be a liquid that regulates pH. The pH in such cases is not particularly limited so long as it is a pH that is conducive to detection of the detection substance. The pH of the liquid can, for example, be regulated by a pH-regulating reagent that is an alkaline reagent, an acid reagent, or the like.

Examples of the alkaline reagent include alkalis and aqueous solutions of alkalis. The alkali is not particularly limited, and examples include sodium hydroxide, lithium hydroxide, potassium hydroxide, and ammonia. Examples of the aqueous solutions of alkalis include aqueous solutions in which alkali is diluted by water or a buffer. The concentration of the alkali in the alkaline aqueous solution is not particularly limited, and may, for example, be from 0.01 mol/L to 5 mol/L.

Examples of the acid reagent include acids and aqueous solutions of acids. The acid is not particularly limited, and examples include hydrochloric acid, sulfuric acid, acetic acid, boric acid, phosphoric acid, citric acid, malic acid, succinic acid, and nitric acid. Examples of the acid aqueous solutions include aqueous solutions in which acid is diluted by water or a buffer. The concentration of acid in the acid aqueous solution is not particularly limited, and may, for example, be from 0.01 mol/L to 5 mol/L.

In a preferred embodiment of the electrolysis device of the present disclosure, a containment space is provided in the cell below the pair of electrodes to contain any broken fragments from the carbon electrode.

Even with the shape of the carbon electrode as in the first aspect, deterioration from repeated electrolysis reactions is sometimes unavoidable, and particles of carbon may sometimes break off. Such particles of carbon flow under convection in the cell along with convection currents of the solution in the cell as bubbles (for example, hydrogen gas) generated by an electrolysis reaction rise, obstructing the electrolysis reaction.

The containment space is provided in the cell in order to avoid such a situation arising, as much as possible. The containment space is provided below the pair of electrodes. Namely, the containment space is positioned below the lower-positioned electrode of the pair of electrodes.

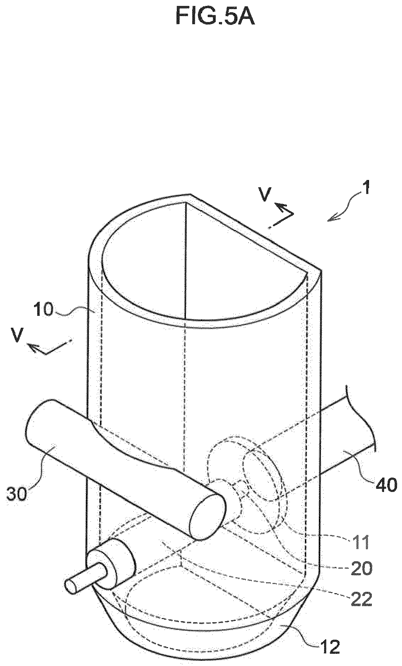

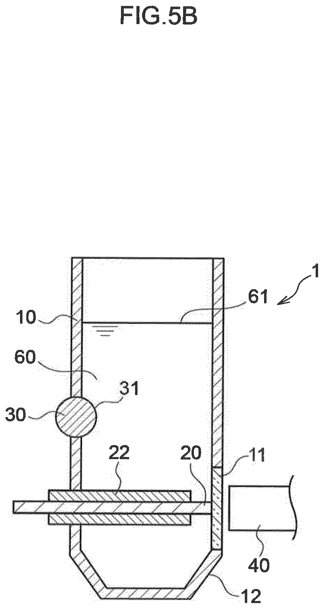

As schematically illustrated in Fig. 5A and Fig. 5B, for example, the containment space is preferably a space at the bottom portion of the cell 10 with an inner diameter that decreases on progression downward.

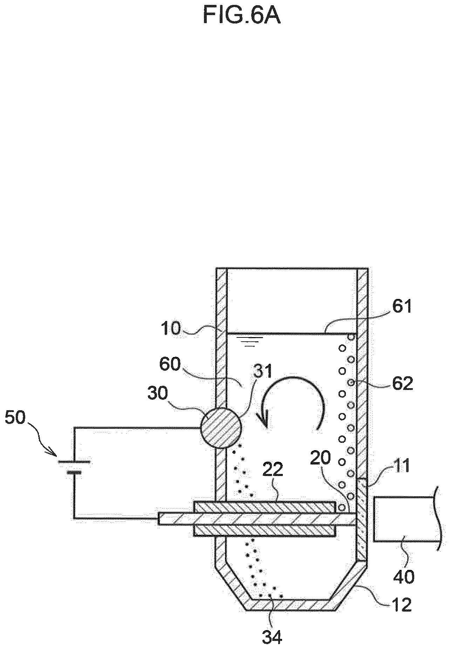

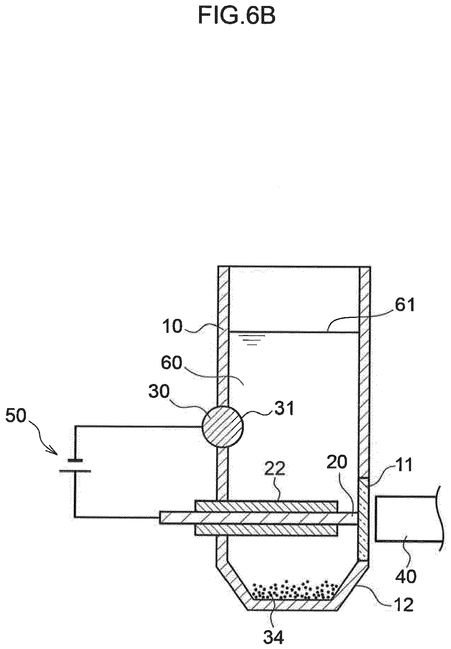

Explanation follows regarding an exemplary embodiment of the electrolysis device of the present invention, with reference to Figs. 5A and 5B, and Figs. 6A and 6B. For ease of explanation, in these figures the structure of each section is simplified as appropriate and illustrated schematically such that ratios of dimensions of each section etc. differ from actual dimensional ratios.

As illustrated in Fig. 5A and Fig. 5B, the electrolysis device 1 of the present exemplary embodiment includes a cell 10, a pair of electrodes (a small electrode 20 and a carbon electrode 30), and a light receiver 40. The cell 10 exhibits a substantially cylindrical shape, having a portion of its side face as if truncated to form a flat face shape. A circular light-transmissive portion 11 is included in the flat face portion. The light receiver 40 is disposed outside the cell 10. Luminescence emitted by applying a voltage to the small electrode 20 and the carbon electrode 30 passes through the circular light-transmissive portion 11, and the light receiver 40 is disposed so as to be capable of receiving the luminescence of the detection substance. The small electrode 20 is disposed parallel to a liquid surface 61 of a solution 60, and a tip end of the small electrode 20 is disposed so as to abut the light-transmissive portion 11. The carbon electrode 30 having a cylindrical shape is disposed with a portion of its side face in the side face of the cell 10 on a side of the cell 10 facing the circular light-transmissive portion 11, such that the carbon electrode 30 intersects the vertical direction at a right angle, and this portion of the carbon electrode 30 is exposed to the interior of the cell 10. Namely, the length direction of the carbon electrode 30 and the length direction of the small electrode 20 are at skew-line positions with respect to each other. The liquid-contacting portion 31 of the carbon electrode 30 originates from the side face of a circular tube shape, and is thus configured with only a three-dimensional curved face (see Fig. 2A to Fig. 2C). The small electrode 20 is covered by an insulator 22. A containment space 12 having an inner diameter that decreases on progression downward is provided further down below the small electrode 20 at the bottom portion of the cell 10. In the electrolysis device 1 of the present exemplary embodiment, the solution 60 containing the detection substance is introduced into the tube of the cell 10 such that the solution 60 makes contact with the small electrode 20 and the carbon electrode 30.

In the present exemplary embodiment, the small electrode 20 is installed parallel to the liquid surface 61 of the solution 60, and most of the surface of the small electrode 20 is covered by the insulator 22.

In the present exemplary embodiment, the small electrode 20 and the light-transmissive portion 11 contact each other; however, the present embodiment is not limited thereto, and for example, the small electrode 20 may not make contact with the light-transmissive portion 11. The distance between the small electrode 20 and the light-transmissive portion 11 is not particularly limited, and may, for example, be from 0 cm to 0.5 cm.

The material of the light-transmissive portion 11 is not particularly limited, and may, for example, be set as appropriate according to the wavelength of the luminescence, so long as it is a material that transmits luminescence emitted by applying voltage to the small electrode 20 and the carbon electrode 30. Examples of the material of the light-transmissive portion 11 include quartz glass, acrylic resin (PMMA), borosilicate glass, polycarbonate (PC), cyclo olefin polymer (COP), and polymethylpentene (TPX (registered trademark)). The size of the light-transmissive portion 11 is not particularly limited, so long as it is a size that enables transmission of luminescence emitted by applying voltage to the small electrode 20 and the carbon electrode 30.

In the present exemplary embodiment, the cell 10 is a bottomed cylindrical shape having a portion of its side face truncated to form a flat face shape running along its length direction; however, the shape of the cell 10 is not limited thereto, and may be any desired shape. The material of cell 10 is not particularly limited, and examples include acrylic resin (PMMA), polypropylene (PP), polyethylene (PE), polyvinylchloride (PVC), polyethylene terephthalate (PET), and polystyrene (PS). In cases in which the cell 10 has a bottomed tube shape, the diameter of the cell 10 is, for example, from 0.3 cm to 1 cm, and the height of the cell 10 is, for example, from 0.9 cm to 5 cm. Into the cell 10 is introduced 0.3 cm³ to 0.8 cm³ of the solution 60.

The light receiver 40 is not particularly limited, and examples include known optical measurement instruments such as CCDs, spectroscopy instruments, and so on. The light receiver 40 may, for example, be a transmitter that transmits the luminescence to the optical measurement instrument disposed outside the electrolysis device 1. Examples of the transmitter include a transmission path such as an optical fiber.

The method of manufacturing the cell 10 is not particularly limited and the cell 10 may be a molded body manufactured by injection-molding or the like, or may be manufactured by forming a recess in a substrate such as a plate. The manufacturing method of the cell 10 is not particularly limited, and other examples thereof include lithography and machine cutting.

Next, explanation follows regarding a case in which metal ions (such as mercury ions, lead ions, etc.) present in the solution 60, serving as an acidic aqueous solution, is the detection substance, so as to summarize a spectroscopy analysis method employing the electrolysis device 1 of the present exemplary embodiment.

First, in a state in which the solution 60 has been introduced into the cell 10, a voltage is applied by a voltage application device 50 such that the small electrode 20 acts as the cathode and the carbon electrode 30 acts as the anode, as a concentration process to concentrate the detection substance in the vicinity of the small electrode 20, as illustrated in Fig. 6A. Then, metal ions present in the solution 60 are attracted to the small electrode 20, this being the cathode. At the same time, hydrogen ions in the solution 60 are also attracted to the small electrode 20 and gain electrons there to form hydrogen gas, resulting in bubbles 62 arising from the small electrode 20.

Then, the bubbles 62 float up toward the liquid surface 61 of the solution 60, and convection of the solution 60 is generated in the cell 10 accompanying this action. Carbon particles 34 that have broken off from the carbon electrode 30 also undergo convection in the solution 60 along with this convection; however, when the carbon particles 34 reach the containment space 12 which narrows at its base face side, the carbon particles 34 are caught and are thus not liable to be re-convected. This reduces the possibility of an electrolysis reaction being hindered by the broken off carbon particles 34 undergoing convection in the solution 60.

Next, a voltage is applied by the voltage application device 50 such that the small electrode 20 then acts as the anode and the carbon electrode 30 acts as the cathode, as illustrated in Fig. 6B, in a detection process to detect the detection substance that was concentrated in the vicinity of the small electrode 20 by the concentration process. Then, plasma is generated from the metal ions that were attracted around the small electrode 20 by the prior concentration process, and the light generated as a result passes through the light-transmissive portion 11 and is received and detected by the light receiver 40.

### Industrial Applicability

The present invention may be utilized in an electrolysis device provided with a carbon electrode.

## Claims

1. An electrolysis device (1) comprising:
a cell (10) for containing a solution (60); and
a pair of electrodes installed in the cell (10), wherein:
one electrode of the pair of electrodes is a carbon electrode (30); and
a liquid-contacting portion (31) of the carbon electrode (30) for making contact with the solution (60) in the cell (10) is configured by only a flat face or three-dimensional curved face.

2. The electrolysis device (1) of claim 1, wherein a containment space (12) is provided in the cell (10) below the pair of electrodes to contain any broken fragments from the carbon electrode (30).

3. The electrolysis device (1) of claim 2, wherein the containment space (12) is a space at a bottom portion of the cell (10) having an inner diameter that decreases on progression downward.

4. The electrolysis device (1) of any preceding claim, wherein the cell (10) contains the solution.
